# EUROPEAN PATENT APPLICATION

(11) **EP 2 860 686 A1**
(43) Date of publication of application: **15.04.2015**
(21) Application number: 13187634.4
(22) Date of filing: 08.10.2013
(51) Int. Cl.: G06Q 50/00, H04W 4/00, H04W 4/20

(54) **Method of handling digital contents in a social network**

(71) Applicant: Spraed, 91400 Orsay (FR)
(72) Inventor: Meriaux, François, 75012 PARIS (FR)
(74) Representative: Lucas, Laurent Jacques

(57) **Abstract**

There is disclosed a computer implemented method of handling a digital content such as an advertisement in a social network comprising nodes, said method comprising receiving a notification of a short range communication of a modifiable digital content by a node of the social network. In developments, physical proximity is determined by received geolocation data, time interval, and/or use of a short range communication protocol. The digital content is modified according to various rules and criteria, in a distributed or centralized environment. The communication of the digital content can be triggered automatically based on motion sensor or accelerometer data. Payments or exchange of messages can be required to access the digital content or portions thereof. The method can be implemented in smartphones, smart watches or wearable computers such as head-mounted displays.

## Description

### Technical Field

This patent relates to the field of digital data processing and more particularly to the field of handling digital contents in a social network.

### Background Art

Social networking websites have developed a wide range of technologies to enhance the interactions between users of social networks. Social graphs belong to such technologies. In particular, a social graph is a graph that depicts relations between the members of a social network. The understanding of said social graph can lead to offer a richer online experience.

Social graphs constructed from existing social networking websites present drawbacks. In particular they do not fully reflect the reality of social interactions.

There is a need for a solution to improve the creation, analysis and handling of better - or at least different - social graphs.

### Summary of the invention

Examples are disclosed to provide a "real" or "physical" social network and associated social graphs.

In some embodiments, a social network is associated with a short physical distance, or close proximity, between interacting nodes of the social network.

In some embodiments, relationships between nodes of such a social network or system are associated with one or more qualitative criteria, such as physical distance or close proximity or "in contact" criteria. The physical distance feature leads to a better trust in the overall operation of the social network.

According to a first embodiment of the present invention, there is provided a method as further described in the appended independent claim 1 and dependent claims.

There is disclosed a computer implemented method of handling a digital content in a social network comprising nodes, said method comprising receiving a notification of a short range communication of a modifiable digital content by a node of the social network.

In a development, the short range communication is associated with physical proximity, which is determined by received geolocation data and/or time interval associated with the communication of the digital content and/or the use of a short range communication protocol. Geolocation data alone can be sufficient. The combination of geolocation data and time interval provides more confidence with respect to the establishment of "physical proximity" criterion (time interval which is required for full transmission, or between sender and receiver, or including one or more loops to the central server, including or not network latency, etc). To further increase the level of confidence, the protocol used can be analyzed (as declared or handled or measured).

In a development, the modifiable content is modified, i.e. at least a portion of the modifiable digital content is modified. The modification can be a function of at least one parameter chosen from the list comprising: date; time; location; the number of communications of the digital content; the number of times a node has communicated the digital content; time elapsed since the creation or the last communication of the digital content; the nodes associated with the communication of the digital content; a device identification number; a random value; and combinations thereof. In particular, the "path", i.e. the sequences of successive nodes traversed by the digital content (the "nodes associated with the communication of the digital content") can serve as a basis to determine or influence the modification, alone or in combination with other parameters. The sequence itself is a subset of the graph (the sequence can form an oriented graph, e.g. some nodes can interact between them multiple times, some nodes may never got reached, etc). The modification can be conditional to rules and/or thresholds and/or nodes traversed. For example, upon excess of 100000 exchanges the digital content can be modified (for example degraded or enhanced or improved or demultiplied or split, etc). The price also can change (behavioral pricing), for example can decrease when volume of exchanges increases. In one embodiment, the quality of video frames can change for example (from low definition to high definition for example). The presence of one or more specific nodes in the path can determine certain consequences, said consequences for example comprising the "self-destruction" of the digital content (for example if a predefined sequence such A2-B3-D6-E1-W3 is obtained; for example wherein A is a type of node like Human or Machine or other types or subcategories of nodes and the associated number is an identification number). In another example, if a movie star (for example with identification G675) is reached, certain actions can be taken (fan users can be alerted and the digital content can be changed in return).

In a development, the digital content is modified by a central server of the social network "and/or" by at least one node of said social network. In some embodiments, the central server can be considered as a node of the social network. In other words, the architecture can be centralized or distributed. The preceding "and/or" expression underlines that an hybrid architecture can implement centralized features with distributed ones (for example distribution or streaming of contents can be centralized to and from the central server while payments are distributed with mechanisms such as peer-to-peer money; or to the opposite, contents can exchanged according to a peer-to-peer model while payment is centralized for example for security reasons).

In one embodiment, the role of the central server can be endorsed (or taken) by one or several nodes of the social network. This role can indeed change or evolve over time. Advantages of this development comprise an increased robustness to possible failures of nodes in the social network, fairness among nodes, and an increased privacy or security of data exchange (since communication with a distant central server can be avoided). For example, when a subset of nodes of the social network has no connectivity to the central server, some nodes of said subset can temporarily take the role of the central server (or a part of this role) until a connection can be reestablished. In a further development, nodes can take the role of the central server for example in a round-robin fashion to distribute the associated computational load evenly among them. In such developments, a "role" can comprise a plurality of allocated tasks, which tasks can be statically (i.e. according to predefined persistent schemes) or dynamically re-allocated among nodes of the social network, according to predefined rules and/or conditions. A task can consist of serving as a memory cache, for example in certain circumstances (traffic congestion, limited bandwidth, etc). A task associated with a role can also comprise processing operations, with modification of privilege rights for example. A hierarchy of tasks can be defined in some embodiments. Following, a (static or dynamic) hierarchical organization among nodes can be defined. In one other embodiment, all nodes can be equivalent (in roles or according to one or more particular characteristics). In another embodiment, the characteristics associated with the nodes (role and tasks, modification privilege rights, access rights, etc) can be propagated (i.e. progressively copied or replicated from one node to another) in the social network.

In a development, the step of modifying the digital content comprises the step of adding and/or deleting data to/from the digital content, wherein the added and/or deleted data is predefined or random or function of some of the parameters listed above and wherein the added and/or deleted data is a notification message or another piece of data such as a text or an image or a video frame or an encryption key or a piece of software code comprising executable instructions or a portion of another digital content. Such embodiments allow the digital content to evolve progressively as addition and suppression actions provide the operation of substitution. The added, deleted or substituted data can be brought to the data itself or to metadata of the data (data about the data, for example price; or data associated with the data, for example encryption keys). Randomness can be brought at different levels. Some randomly selected nodes can modify the digital content for example. Or a given node can randomly modify the digital content. Or some random parts of the digital contents can be modified. It can thus be obtained that unique or probabilistically unique contents are exchanged, in some embodiments.

In a development, the communication of the digital content is triggered automatically based on motion sensor or accelerometer data or is triggered based on a user input. Such corresponding embodiments facilitate the implementation of steps of the method (pervasive, ubiquitous computing).

In a development, the communication of the digital content is pushed from a first node to a second node or pulled by a second node from a first node. This development emphasizes that active or passive roles can be endorsed by nodes. Roles can evolve over time: for example a passive node can become active at certain moments and/or given certain digital contents, according to specific predefined (or dynamically computed) rules and/or facts.

In a development, the digital content is associated with lifecycle parameters, comprising time-to-live parameters, and/or with one or more predefined rules of existence and/or with conditional network visibility characteristics. Network visibility for example refers to Bluetooth and/or near field communication (NFC) visibility or to a device which can scan a QR-tag from the display of another device. Visibility of a first device refers to whether a second device can discover said first device when searching for one or more other devices for data communication in the vicinity of the second device. A node can wish to remain hidden to other devices or to the opposite can desire to be solicited. The visibility characteristics can evolve over time.

In a development, the digital content is extracted and selected from the user visual environment by steps comprising one or more of: image acquisition, image segmentation, image recognition, face detection, optical character recognition, and the retrieval of an associated QR code or a combination thereof. Digital contents can be extracted from the reality and almost any visual content or object in the visual environment of a user can serve as a basis for a digital content. Underlying

(interpreted or measured) reality is also at reach (for example infrared or bio-activity measures also can lead to such digital contents).

In a development, one or more payments can be received or requested by a node. In addition or alternatively, payment can be received or requested by the central server of the social network. The development enables micro-payments for example. A system of credits can be used (virtual currency for example) with or without a link to a real currency. Credits gained or paid can be associated with one or more user accounts and be convertible or not.

In a development, a payment can be required to grant or receive an access right to the digital content or to a portion thereof and/or to receive an encryption or decryption key and/or to receive an additional portion of the digital content and/or to unlock a feature associated with the digital content. The reasons justifying one or more technical messages of payment can indeed be diverse. For example, a payment can be required to access the end of the comic book or to see the ball in a football/soccer game for example.

In a development, the digital content can be at least a portion of text and/or audio and/or video and/or executable program instructions, wherein said digital content is one of URL, SMS, short message, advertisement, commercial offer, email, web page, text file, sound, voice, music, image, 2D movie clip, 3D movie, game or software program. In other words, the digital content can carry simple or very complex information. In particular it can be executable text, i.e. software.

There is disclosed a computer program comprising instructions for carrying out the steps of the method when said computer program is executed on a suitable computer device.

There is also disclosed a system comprising means adapted to carry out the steps of the method. In particular, said means comprise a computer and/or smartphone and/or a smart watch and/or a wearable computer and/or a head-mounted display (HMD, for example smart glasses).

There is also described a web page or an app screen comprising an actionable or displayable icon or button which upon triggering operates a node or a central server of the social network to communicate a modifiable digital content. An "app screen" corresponds to the displayable elements of an "app" such as the application to be downloaded onto mobile devices in "app stores". The icon (a graphical element) can be manipulated directly or indirectly by a user.

Further advantages of the present invention will become clear to the skilled person upon examination of the drawings and detailed description. It is intended that any additional advantages be incorporated therein.

### Description of the drawings

Embodiments of the present invention will now be described by way of example with reference to the accompanying drawings in which references denote similar elements, and in which:
Figure 1 shows several embodiments of the capture or creation of a digital content and nodes of a social network;
Figure 2 shows different embodiments of the communication of a digital content over a social network;
Figure 3 shows a workflow of an embodiment of the method of handling a digital content;
Figure 4 shows one possible implementation in a web page;
Figure 5 shows an embodiment of the method in a mobile device;
Figure 6 illustrates an example of a use of the method;
Figure 7 illustrates another example of a use of the method;
Figure 8 and 9 illustrate database and transaction aspects;
Figure 10 illustrates some examples of workflow of payment messages.

### Detailed description of the invention

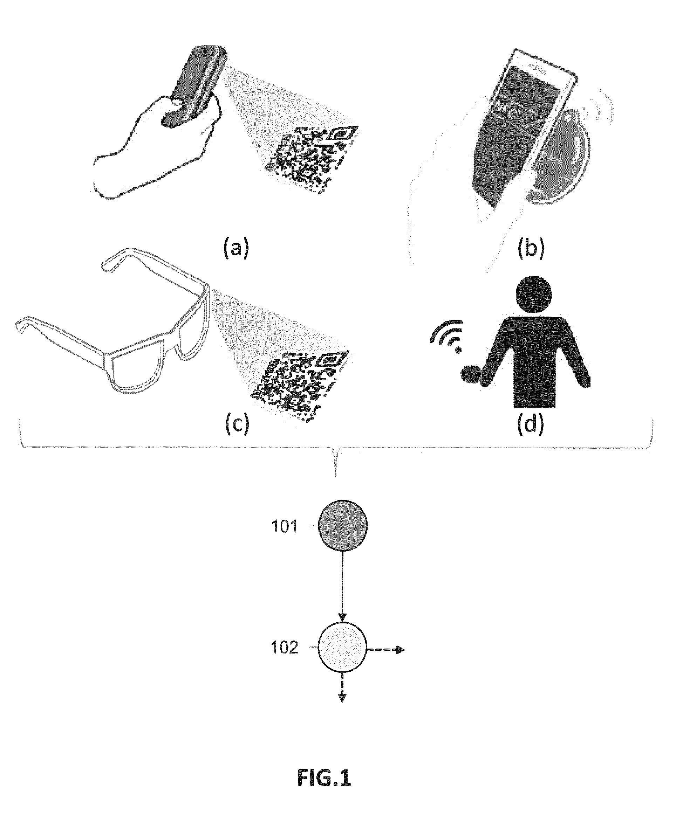

Figure 1 shows several embodiments of the capture or creation of a digital content and nodes of a social network. The figure shows a modifiable digital content which is communicated according to some embodiments of the disclosed methods and systems. Nodes (users or machines) communicate (or exchange or diffuse or connect or disseminate or disperse or propagate or circulate or distribute or broadcast or spread or transmit or send) a modifiable digital content to one or more similar nodes.

In a particular and optional embodiment, each node is associated with a verified identity, strengthening further the trust in the social network and the digital content exchanges.

The social network referred to in the present disclosure for example corresponds to an existing social networking website, or a subset of such a social network (e.g. not a virtual social network, but a real or physical social network). A social network is a social structure made up of a set of social actors (such as individuals or organizations) and a set of the dyadic ties between these actors. A social network is associated with an oriented graph. A social network can be run on the Internet, via a social networking website, between mobile devices for example. Such a social network can also involve machines (which act for example as local storage providers or caches of data). The underlying physical network for data transmission can be the Internet, or a subset of the Internet, or any other type of digital networks (personal area networks, adhoc networks, etc.).

The digital content can be text (SMS, tweet, short message, email, URL, etc), audio (voice, music, sounds, etc), video (2D or 3D content) or a combination thereof (multimedia content). The digital content can be of any format (standard or proprietary), with adaptive characteristics (adaptation of the content to the capabilities of the receiving device, e.g. bandwidth or resolution) or not. The digital content can be an advertisement in particular. It also can be a music song. It can be parts of a music song, for example lyrics (metadata), or voice track (data), and/or one or more instrumental tracks, and/or a musical style which can be applied to the song. It advantageously also can be an executable text, i.e. a software program. It can be software functionality or an option in a software program. It can be lines of code, a script, an add-on, a plug-in, an extension or a codec. It can be a (software) game, or some levels of a game or some characters in a game or any other subpart of a game (like background image, life points, credits, etc).

The digital content, which can be modifiable or not modifiable, is communicated (or sent or transmitted or propagated or diffused) from one user (or client or vendor or seller) or from a node (or machine or device or element) to one or more other nodes or users. The interacting elements of the disclosed network indeed can be human beings (users) or machines (devices), or implying the contributions of both. The event triggering such communication can be automatic (sensor-driven, e.g. proximity or accelerometer data) or manual (i.e. decided by the user). Triggering modes can use predefined thresholds (according to measured accelerometer data, face recognition results, gesture recognition, predefined contextual rules, etc).

The digital content is exchanged or communicated between nodes in physical proximity. In particular, said physical proximity can be associated with a "short range communication" criterion. Short range communication protocols comprise NFC, QR tags scanned by a camera, Bluetooth, Wifi, Bump, LTE direct, Airdrop, iBeacons, communication by acoustic waves, visible light, infrared light, laser or other device-pairing mechanism (or wireless communication protocols). The physical proximity is determined by the assessment of the received geolocation data and/or time interval associated with (or required for) the communication of the digital content (i.e. for example the difference between the time at which the sender sends and the receiver receives the digital content) and/or the use of a short range communication protocol. Physical proximity can be determined from the mere provision of geolocation data of the two nodes, or may need to be corroborated by further data including time intervals. To avoid design around or circumvention, the protocol for data transmission as well as other optional parameters, like probability of link in the social graph, etc., can be leveraged.

Figure 1 shows a node (or user) 101 which is the creator or at the origin of the communication of the digital content to be communicated (not shown). For example, the content is an advertisement and node 101 corresponds to an advertiser. The digital content is pushed by the node 101 to node 102. Alternatively the digital content is pulled by node 102 from node 101 (for example node 102 can be associated with prior declarations or settings that it welcomes certain categories of content, e.g. music of a certain artist, and node 102 can constantly scan or monitor the network for such corresponding contents in the vicinity or proximity). Once the content is retrieved, the process goes on and the digital content is further communicated, according to the same schemes previously described.

Figure 1 shows one example of an implementation for short range communications. Regarding a first optional implementation with QR tags, on the screen which displays the details of a digital content or a user profile, by pressing a button, a QR-image is generated and displayed on the screen. The QR-image can be read by another device with the help of a camera. This action can be triggered from the application by pressing a button with a user interface icon. Alternatively, and for example, with a NFC implementation, on the screen which displays the details of a digital content or profile, a corresponding NDEF message is automatically loaded into the NFC device of the smartphone. In this case advantageously, no user action is required. Another user can touch this smartphone with his/her device to read the NDEF message.

The method can be implemented in a variety of computing devices, with or without contact, in an active way (a) and (b) or in a passive way (c) and (d). For example, the user can use a smartphone for image acquisition in (a). Alternatively, the user can use a NFC reader (in a telephone, a computer or any other host device) in (b). A head-mounted display (HMD) also can be used in (c), in which case an active or passive acquisition of a QR tag or another information carrying and detectable object can be enabled. In the case of passive acquisition the choice to propagate a given digital content is made by the user, who is proposed or prompted such a proposal for diffusion. Any other short-distance technology can be used (d).

In some more details, an implementation in head-mounted displays (wearable computer), can be implemented in the following manner: first a face recognition step performs an identification of a user. Alternatively, the detection of a handshake puts two users in contact (by means of video interpretation, and/or by means of other sensors' data, for example accelerometer data received by or acquired from a smart phone or a smart watch. If both users have enabled the exchange of profiles when handshaking, when they meet, a profile picture of the other user is displayed on the glasses (due to face recognition). When they handshake, the gesture is recognized by the glasses and this event triggers an exchange of profile between the two users. The exchange can be automatic or a confirmation can be required by simply tapping the tactile area of the glasses (or by voice confirmation command or predefined settings).

Another example is provided. A software program being executed to enable the video detection of a specific gesture to exchange a digital content, the user for example selects some content he/she would like to exchange. By moving the hand forward, palm facing up, the glasses can recognize the gesture and the exchange of the content is then triggered. Other gestures, predefined or user-defined or personalized, are possible. The receiver of the content is determined by face recognition. The exchange can be automatic or a confirmation can be required by simply tapping the tactile area of the glasses (or of an associated connected device).

In one embodiment, smart watches are used. Smart watches are wearable computers worn at the wrist or on the arm. These devices equipped with a short range communications technology indeed can be used to propagate one or more digital contents. In such a case, handshakes can be directly detected thanks to motion sensor or accelerometer data, to put two users in contact. Alternatively specific gestures can be used to trigger the propagation. Also alternatively or in combination to improve reliability and robustness, the proximity of users can be determined via proximity sensors such as Bluetooth Low Energy sensors. Smart watches can be also provided with image acquisition means (e.g. cameras) and display means (e.g. screen) to read and display QR-tags, respectively, and the can integrate NFC transceivers.

The propagation of a digital content is caused or facilitated by one or more nodes of the network. Said node can be a human node (a user) and/or or a machine (server, robot, etc). In particular, machines can serve as "caches". For example, digital contents can be temporarily stored in many different places and according to different communication modes, including: retail store, kiosk, vending machine, ATM, desktop, laptop, server, selling point, sales stand, sales wall, static robot, moving robot, car, bicycle, magazines, newspapers, posters, stickers etc. As one example of such a "caching" mechanism, a digital content can be stored in a NFC tag so that other users can pick it up with their smartphones (NFC enabled) later on. The users also can change or modify the digital content and leave it place, so that further actions can take place. For example, users can simply change the message stored in or on a device. In another embodiment, users can donate and the digital content (represented by the animation of a flower) can further grow. Or if the digital content is the analogy of graffiti on the wall, user can add their personal touch to the public graffiti.

In association with this characteristic of "caching", a digital content lifecycle can be defined. A digital content for example can exist - or last - only for a certain amount of time. A simple TTL (time-to-live) can be defined. Or the digital content can require to be propagated within a certain amount of time in order to be kept "alive". Or according to another example, it can "survive" forever but its visibility can be conditional. For example, the visibility from a network standpoint can be limited or depend on predefined parameters (for example location, time, date, other rules). An example is a digital content showing a computer generated animation of a cute kitten which requires further propagation(s) from a user within 24 hours in order to accomplish certain tasks graphically restituted (and if not propagated would trigger some other visual events).

Existing objects in the environment can be selected to serve as digital contents. For example, web advertisements banners can be associated with one or more digital contents handled by the invention. For example, with an identification number or a capture via a QR code or a photo, such a digital content can be propagated. Augmented reality devices and wearable computers facilitate many other uses. With a head-mounted display, a user for example can select in his or her visual vicinity an object or a portion of an object and start a propagation chain according to the present disclosure. For example, (automatic or on demand) image segmentation algorithms can provide image portions or video links which can be used as digital contents. Face detection algorithms can be associated with digital contents as well. Face detection with limited search space (of known faces in the social graph) can lead to accurate results and the exchanges of profiles can be facilitated. The selection with electronic glasses (or smart watches) of an existing advertisement (static image in a magazine or video displayed on a screen in the environment of the user) can be associated with a digital content and the described systems and methods can be applied to said digital content. The same is true for electronic commerce. For example, a user walking in the street can "capture" a portion of the reality, for example trigger the image acquisition of a dress exhibited in a store and start the propagation of an associated digital content. For example, the mode of capture can be a head-mounted display (HMD) associated with a computer; said capture being voice-controlled and the HMD further providing augmented reality interface for subsequent selection and action options to the user. Another example is a user in a library who reads a funny sentence. The sentence is captured in a similar way (image, then Optical Character Recognition (OCR) and creation of an associated digital content) and "bounced" to friends thanks to embodiments of the invention.

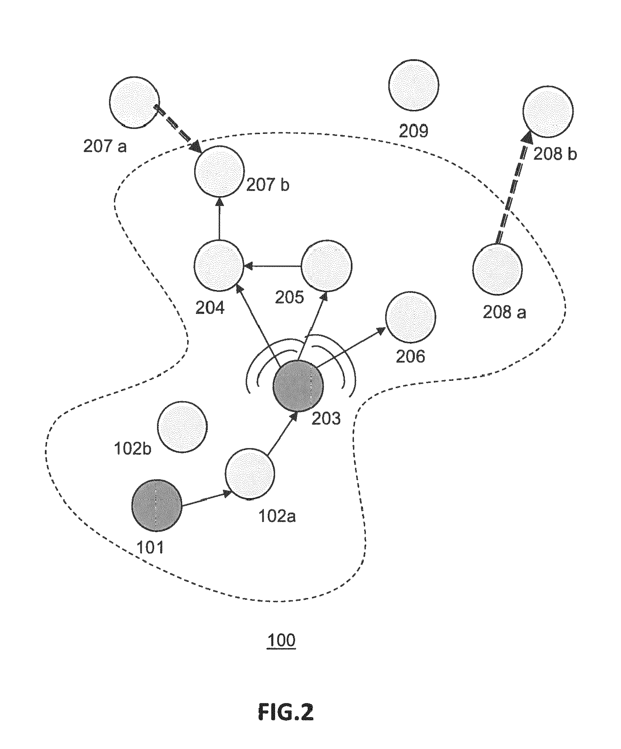

Figure 2 shows different embodiments of the communication of a digital content over a social network.

Regarding the architecture of the system, it can be centralized or distributed or it can be a combination of centralized and distributed features. One or the other choice of architecture can be associated with some respective advantages regarding some legal aspects (copyright, hosting, etc). In a centralized implementation, one or more (master) servers are tracking the exchanges of the digital content. The digital content as such is delivered by the master servers to the nodes, i.e. the nodes may not exchange the content directly between them. For example, only some identification number associated with a digital content can be exchanged which is then reported to the server to obtain the full content. In a distributed implementation, for example, digital contents are passed directly between nodes of the network and the master servers may not intervene in the handling of the digital contents other than to collect metadata about exchanges (for example intermittently or even opportunistically when a connection to the network becomes open then the accumulated or collected data is sent to the master server at once or by fractions). The architecture of the system implementation can take hybrid features, i.e. intermediate forms between centralized versus decentralized implementations. For example, parts of the digital content can be delivered by the master server(s), and only by the master servers, while some other parts can be communicated by the nodes or users. The delimitation of parts can be predefined or not, static or dynamic. For example, a new game level can be delivered by the master server only, while some additional video frames for example for uncut versions of a movie can occur without the intervention of the master server. Software program functionality likewise may require the knowledge of the master server (for example to assess and control systemic risks of the integration of said functionality into the software being communicated). Local constraints (bandwidth, computing power available) also can lead to particular behaviors and rules for handling the digital content enrichment or modification.

Figure 2 shows a social network 100 with various examples of interactions between examples of different nodes. The creator or originator 101 (for example an advertiser) of a digital content (for example an advertisement) comes in physical proximity with two other nodes 102a and 102b. Node 102b is a machine whose embedded rules reject the digital content (or communication capabilities can be turned off for example, and the node is not visible). Node 102a is a human being who is available for short range communications (or who is visible) and accepts the digital content. Node 102a can have the possibility to reject the digital content (for example because said node is not interested in it). Rules can also be implemented (complimentary or supplementary) which rules can forbid the exchange of said digital object between both nodes (for example, because said nodes have not physically met before i.e. the criteria for physical proximity are not satisfied, for example node 101 does not have the right to exchange the content, and/or node 102a does not have the right to receive the content). Said node 102a, in turn, later and at a different physical location (for example during a meeting), further transmits the digital content to node 203, which in turn transmits to three other persons. The node 203 can therefore be considered as a "super-node" because it most actively diffuses the digital content through the network. The analysis of the aggregated information about the propagation of digital contents in the network can lead to identify nodes of the network which are more active than others, be it relative to one category of content or measured in absolute for the global activity. Node 203 communicates the digital content to nodes 204, 205 and 206. At a later point in time and possibly at a different location, node 205 wants to exchange the digital content with node 204 which already possesses it from the exchange with node 203. Dependent on the nature of the digital content (e.g. has it been modified since the last exchange, is it possible to possess the same content multiple times (virtual credits, collection cards, etc.), node 204 can either accept or reject the exchange or the exchange can be automatically rejected due to some implemented rules.

Node 204 exchanges the digital object with node 207b which physically passes by node 207a which is (for example) a machine which automatically pulls (or sucks or aspires) the digital content. For example, this can be an (active) "backup machine" located at the office. Node 209 is a user (human being or machine) which was in close proximity of the users during the meeting but who was not close enough to get the data. The corresponding user will not get the digital content, either pushed or pulled. Node 208a is, for example, another user of the network who is in possession of another digital content. When node 208a physically passes by node 208b (a machine), the content is automatically pushed towards it. In contrast to node 207a, node 208b is a (passive) backup node on which users can automatically push contents.

The role of the central server (or a plurality of master or central servers) can be reduced to zero (peer-to-peer model) or, to the opposite, the central server can actively monitor and control the social network. For example, the central server (or "social network operator") can transmit a digital content to specific super-nodes, in order to make sure or to enable a "percolation" of said digital content in the social network. For example, an advertiser may want to give the digital content associated with one of its advertisements to a certain number of super-nodes or very active seed users in the social network to ensure a fast propagation or diffusion. A network is characterized by its controllability. The controllability is influenced by one or more super-nodes, in particular. Even if the central sever cannot act on each and every transaction or communication of the digital content in the social network, at some points in time it can help the propagation to be pursued or even to go faster at some particular delicate points. Concretely, the provider of the social network hires operators who monitor the network and facilitate the propagation in real-time. The social network operator also can use rules to handle the operations of the network. Human moderation and automatic rules can also be combined.

While several definitions can be proposed regarding the term "super-nodes", the latter can be generally defined as nodes presenting certain characteristics according to at least one predefined criterion. Such criterion for example can be associated with network topology (in average, in peak) and/or time (absolute or relative) and/or the category or type of digital content. The "super-nodes" can be static (i.e. remain always the same for all kind of digital contents) or dynamic (i.e. change according to the type of digital contents being exchanged, for example movies or music tracks). "Super-nodes" also can change over time (the network dynamics is not the same at the beginning of the propagation and at the peak of it). The knowledge (and associated metrics and control means) of these super-nodes enables technical consequences. For example, a Bittorrent-enabled propagation of digital contents will present very specific network dynamics).

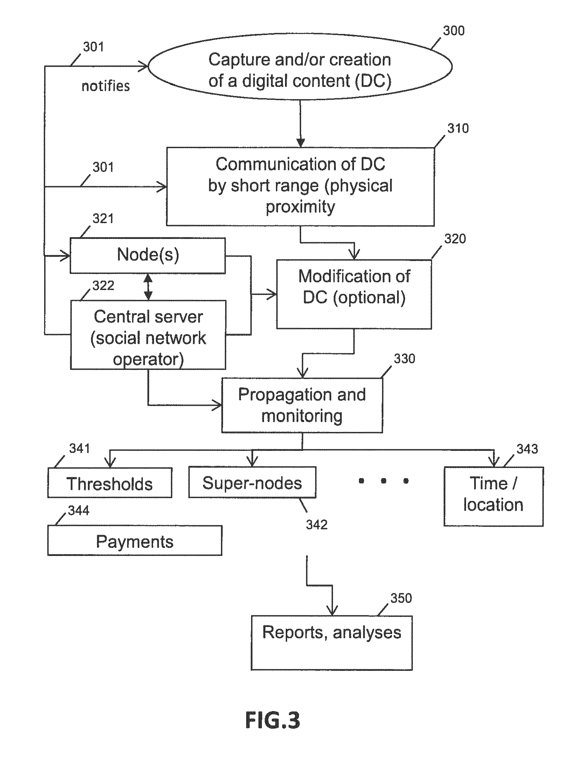

Figure 3 shows a workflow of an embodiment of the method of handling a digital content. At step 300, a digital content (e.g. an advertisement) is captured (e.g. from a magazine), or created from scratch by a first user. The digital content is sent 310 to a neighbor of the user and modified by the latter 320. In turn, the central server modifies the content. The server provides additional data 322 and a third node 321 further modifies the digital content. Optionally, the first user and/or the second user are notified by the central server 301 of one or more further communication or propagation iterations (or upon excess of propagation thresholds numbers for example). The central server continuously or intermittently monitors the propagation. At some points, the central server facilitates or forces or enables the communication to certain particular nodes 342 or handles rules and thresholds of the communication scheme 341, for example based on time, date and location 343. At some points in time and space, some payments 344 (micro payments or large sums of money) are optional or required. In turn and/or in counterpart some access rights can be granted, and/or encryption keys are provided, and/or or additional portions of contents are provided or authorized and/or parts or features are unlocked.

The central server centralizes a unified view of the communication over space and time and delivers analysis (e.g. of super nodes), maps or other reports 350.

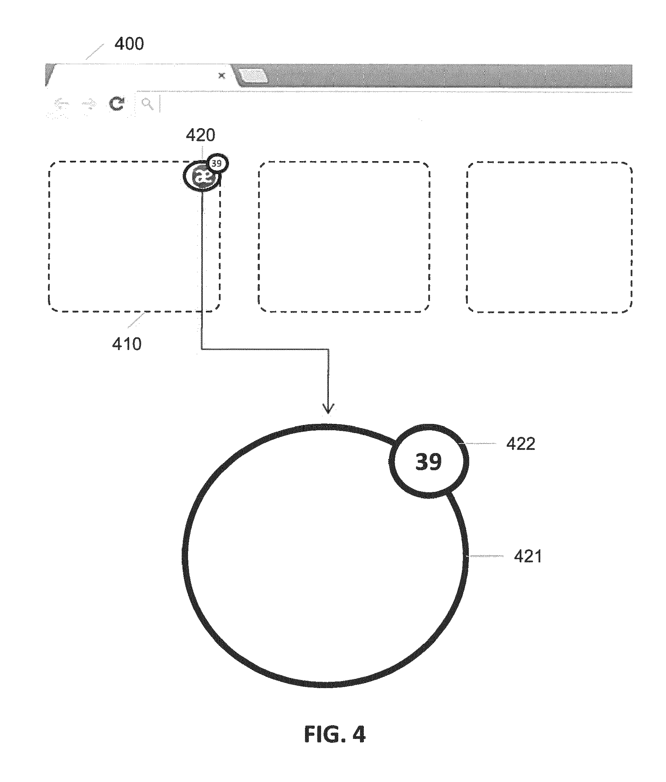

Figure 4 shows an example of an implementation of the method in a web page. Similar to displaying the number of views of a video, the number of times a digital content has been exchanged can be displayed. The indicator can be simple (e.g. counter) but can also be complex (synthetic indicator, resulting from a series of parameters). For example, alternatively, an indicator (activity of diffusion of a digital content, e.g. a parameter calculated based on the total number of diffusions within a certain time frame or a certain geographic area) can be displayed. Such an indicator or activity can be visualized by a number displayed in superposition of an image or part of an image. It also can be associated with such digital content, triggered by a mouse cursor event (e.g. mouse over, pressing a button, touching a screen area, specific gesture, voice command or combination thereof). The visual effect can be static or even dynamic (for example a logo size which grows in size and/or luminosity). This information for example can be displayed both in a corner of the thumbnail representing the digital content being handled and in the detailed view of the content. In one other example, the "human distance" to a person is displayed by a number in a corner of a profile picture.

In figure 4, in a web browser tab is displayed a web page. An element 410 of the HTML page (digital content element or URL or clickable area or an image or title or word or any part of the web page) is associated with an indicator (simple or complex). The association can be logical link, graphical superposition or dynamic link. The indicator comprises an icon 421 which can be for example static and can represent a graphical representation of a trademark. The indicator also can comprise a (static or dynamic) element such as a counter. For example, the counter can indicate the number of times a given digital content has been communicated. Associated with a user, such a graphical element can indicate the ranking or status or score of said individual. Visual effects can restitute or reflect the freshness of content, the speed of propagation or any other composed and derived metrics of the social network. For example blue colors can denote slow speed while red colors can denote speed, and gradation and/or shading and/or blinking and/or animated visual effect can enable the presentation of intermediate states and options. The indicator also can be executable or enable user actions, such as a left-click or right-click or touch action. The indicator can be in 3D and different perspectives can encode different information (one face of a cube can encode speed, another face the number of users in possession of the digital content, another one an indication of the expiry date, another one of the creation date, another one the maximal distance between users, e.g. said distance being calculated by the master server, etc).

There is disclosed a system comprising a web page comprising a display icon which upon triggering operates a first node (or a central server) of a social network to communicate a selected modifiable digital content to a second node of the social network, wherein the two said nodes are in physical proximity, said proximity corresponding to the distance associated with a short range wireless communication. In a development, the triggering operation is associated with accelerometer data and/or predefined rules. In a development, the triggering operation is associated with user confirmation.

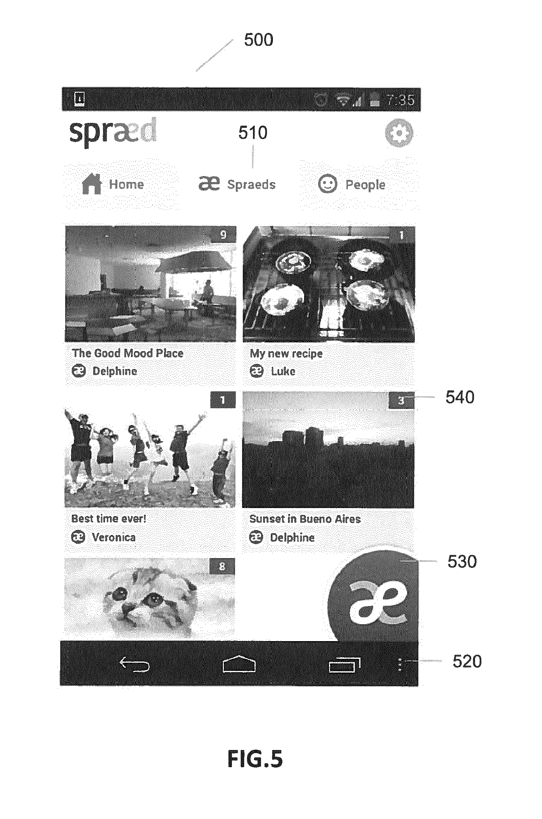

Figure 5 shows an embodiment of the method in a mobile device. The figure shows a screenshot of a user interface implementing some embodiments of the method. The figure shows the screenshot 500 of an application using the described and claimed social network. The picture shows a tab 510 along the User Interface (UI) commands 520. The tab 510 displays a series of digital contents (images in the example) which have certain associated indicators (counters of the number of exchanges in the example). The button in the form of a logo 530 is a button which upon trigger enables further actions.

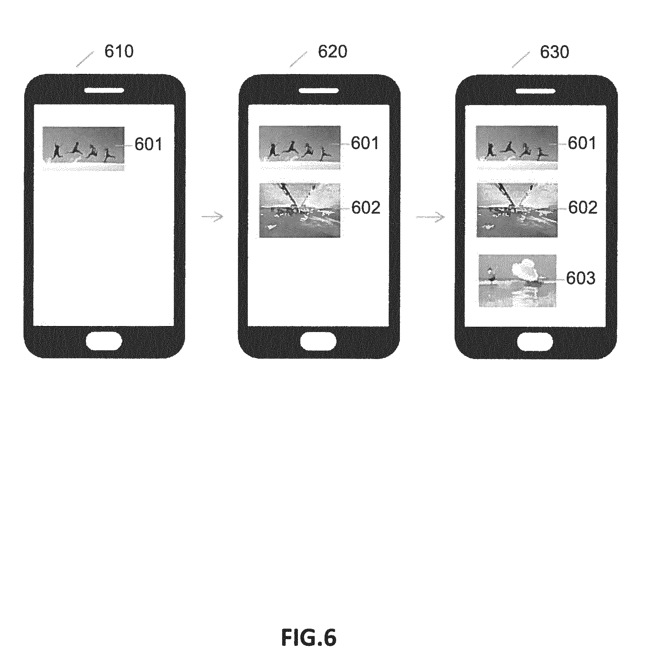

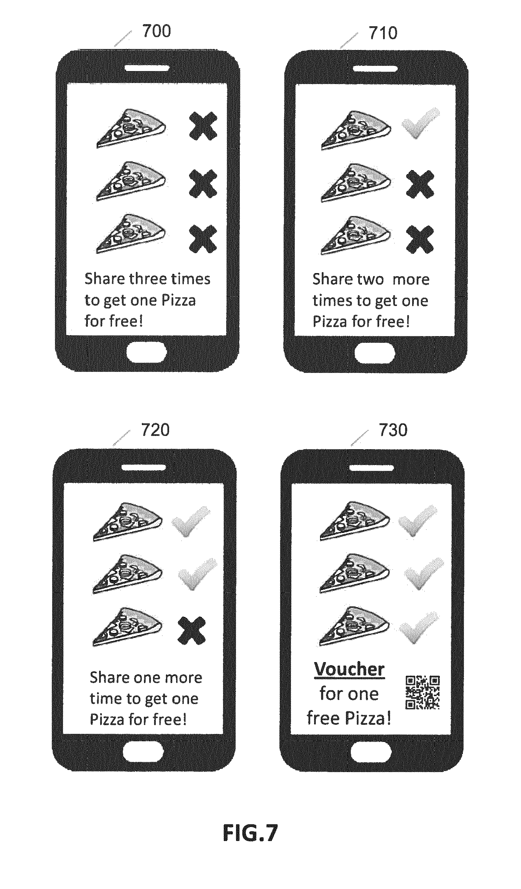

Figure 6 and 7 illustrate some examples some use cases in and of the (physical) social network. Figure 6 shows the original first state 610 of the digital content which comprise only one image 601. At a second step 620, for example after one transmission of the digital content, the digital content is modified and one second image 602 is added to the digital content, which now comprises two images. After iteration, for example at step 630, a third image 603 is added. In the example, each image is added by a node of the social graph. As described, an image can be transmitted by the central or master server and/or by a node. For example, bonus image 603 can be provided by the central or master server while image 602 is provided by an intermediate node in the network. Payment and incentive options can be intermingled with such a scheme (for example, the third image can be provided conditional to the provision of the second image which can require a micro-payment ; or the third image can be subsidized by a third-party who desires to encourage the diffusion at certain nodes and offer parts of the modifiable content as gifts).

Figure 7 shows yet another example of use. At a first step there are indicated three slices of pizza and a recommendation to communicate the digital content "Share three times to get one Pizza for free". Once the digital content is successfully communicated, a display message encourages the further communication of said digital content "Share two more times to get one Pizza for free" (for one given node, but the principle also works collaboratively, or at some point). In the example provided, the user further receives the message "Share one more time to get one Pizza for free". Upon success, the user finally receives the message (from the central or master server) "Voucher for one free pizza" and the user indeed receives a token or a QR code in the computing device or his/her account which can be redeemed at a point of sales.

Other examples of use are now described. In one embodiment, a digital content can be a simple combination of a title, description, image, URL, and/or a collection of data files. This digital content can be exchanged without modification among users, i.e., it does not change and everyone in the social network with appropriate access rights can see the same digital content.

In another embodiment ("Loyalty scheme"), a user for example obtains or receives a digital content in a store/restaurant by touching a NFC sticker/device or photographing a QR code. If said user spreads or exchanges this voucher a certain number of times, the user can get access to some reward (e.g. a free drink). In this case, the content of the digital content might change since every user of the voucher has communicated it a different number of times. This can be also graphically visualized, (example of figure 4).

According to another embodiment ("Exchange of payable content"), some content, which has been bought by the user (sender), can be shared with other users. At the time of reception, other users gain access to the content if they agree to pay as well, otherwise the content is not (or not completely) accessible. According to another embodiment ("Music Promotion"), a digital content can comprise one or more music files, e.g. mp3. When the user first receives the digital content, the user has only access to the first file (or may only access the first few seconds of it). For a given number of diffusions of this digital content, the user can gain access to some more files (or for example to some more seconds of an audio file). When the maximum number of diffusions has been reached, the user earns the possibility to buy the remaining parts of the album (possibly at a reduced price) directly in the application or by being redirected to a content store (music store, app store, etc).

According to another embodiment ("Cinema Promotion"), a digital content can comprise the trailer of a new theater movie. For a given number of diffusions, a user obtains a free cinema ticket.

According to another embodiment ("Software Promotion"), a digital content can comprise a software program with a reduced set of functions (for example similar to shareware or other activation mechanisms). After a given number of diffusions, he/she would get a code which can be entered into the software to unlock new functionalities. Conversely, a user who has bought a certain software program can diffuse it but the receiver will only obtain a version with reduced functionalities. Said user can then either pay or diffuse the digital content to unlock new functionalities.

According to another embodiment ("Advertisement of a rock concert"), a digital content contains an advertisement (ad) for an event, for example a concert. The user who has spread or diffused the ad the largest number of times within a given timeframe wins a VIP ticket.

According to another embodiment ("Photo chain/Music chain"), a user starts to distribute a digital content comprising some elements, e.g. a picture of his favorite spot in Paris. Each and every user who obtains this digital content must or can add one picture/file to the digital content before he/she can diffuse it to other people. Thus, the digital content is modified but every user has access to the same content.

According to another embodiment ("Low-high resolution videos/images"), the quality (for example resolution, quantization, mono/stereo/Dolby, 2D-to-3D) of a digital content can change after a given number of exchanges (for example upon excess of one or more predefined thresholds associated with exchanges of the digital content).

According to another embodiment ("Combination of digital content exchanges for DRM/Encryption"), multiple digital contents can be combined to unlock new content or features. For example, a digital content can contain a copyrighted protected music file and another digital content contains the key to unlock the content. A user who possesses both digital contents can listen to the music.

According to another embodiment ("Token"), a digital content can only belong to one person at a time. After each exchange, the sender of a digital content can hand it over to the receiver. In one embodiment, digital rights management is handled (for example management of licences to read and modify content, management of encryption or decryption keys, etc). In one embodiment, the digital content can provide or enable access to some protected data/media/software files.

According to another embodiment ("Digital content with a limited number of diffusion"), every user can exchange a digital content only a limited number of times.

According to another embodiment ("Privacy-enabled digital contents"), a digital content can only be exchanged with people having a human distance of less or equal to X. The human distance is the number of hops between two users in the graph of the social network. Other criteria or rules permitting the exchange can be based on other metrics derived from the social graph of the network.

According to another embodiment ("Controlled diffusion"), one user of the network (for example the creator of a digital content) can decide who gains access to a digital content. Each time a user having access to the content tries to share the content with another user, a notification is sent to the controller user. This user can decide whether the other user gains access to the content or not. This feature allows the controller user to keep a full control over the diffusion of the digital content.

According to another embodiment ("Profile sharing"), when a user shares a digital content which is a profile (i.e. a content which is directly associated to the identity of a person), the user associated with the profile receives a notification comprising who shared his profile and who received it. Additionally, the user gains access to the profile of the person who received his own profile. In another example of profile sharing, a user A cannot share the profile of another user B to a user C if C does not have access to the profile of user A. These features ensure that profiles are shared with consideration and in a reciprocal manner.

According to another embodiment ("Digital contents for gaming/software"), digital contents can contain items which can give access to new functionalities in a piece of software. For example, special weapons for a multiplayer game.

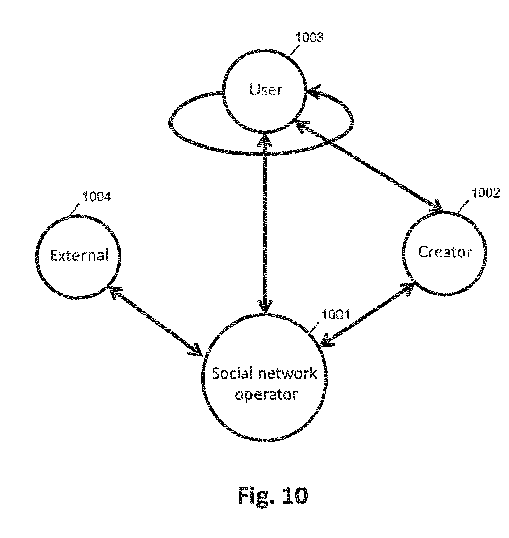

Technical embodiments for business aspects are now discussed. The figure 10 shows the possible directions of payments (or of associated messages or orders) between four different actors or players, namely the social network operator 1001, the creator of a digital content 1002, the users 1003 and external players 1004 (for example the organizer of a tradeshow which would like to provide his event with the social networking functionality or a marketing company which would like to buy statistical data from the network operator).

The incentivization model comprises payment in and payment out from nodes of the network to the operator of the social network in a centralized system. In a distributed model, nodes can exchange money between them, and the operator receives a part of the monetary exchanges as some form of commission. In a preferred embodiment, payment to the operator can be required from the first node only (e.g. the creator of the digital content). An intermediate node (i.e. not the first one) can receive money as a counterpart of its activity. An intermediate node also can pay some money to the first creator node (e.g. to access extra content) or the node from which it has received the content.

In one embodiment, a user can be required to pay for the creation of a digital content. The amount for example can depend on the content (image, music or video), size or diffusion mechanism (modifiable content, voucher) of the digital content. In this model, for example, the advertiser pays a fee at the time of creation to access the social network as an advertising entity. A node providing user generated content (a birthday movie clip, a drawing for example, i.e. non commercial content) can avoid the need for a payment.

In another embodiment, the user such as an advertising company who creates the digital content at the origin (e.g. a soda movie clip) can be required to pay a price for the exchanges of the digital content (i.e. a "cost per engagement"-model). Each exchange can come with an associated price (by analogy with the "pay-per-click", the payment mechanism can comprise a "pay-per-propagate"). Volumes of exchanges can be priced (for example by packets of 10000 communications). Alternatively, the propagation of a digital content can come with a flat fee. For example, an advertiser can pay a flat fee, whatever the fate of the communication of the digital content in the social network.

In another embodiment, thresholds for payment can be handled. For example, the creation and first exchanges of the digital content remain free, but upon viral success, i.e. after the propagation has reached a certain number of persons (e.g. 10000), each exchange is billed to the advertiser. The expense can be capped by contract. The advantage of the model is to guarantee a minimal success for the advertiser, while controlling costs and maintaining sufficient incentives for the social network operator. It is to be observed that more complex schemes can occur, for example involving different pricing when reaching super-nodes (i.e. nodes which show a high redistribution rate statistically, be they at central or strategic points of the social physical network and/or proving high activity level in terms of social behavior). In particular, to boost a propagation it may become desirable to enable the access to one or more super-nodes in real-time to sustain the propagation rate. The creator can pay for the equipment of certain super-nodes with its content.

In another embodiment, a super-node of the network can be offered to start the diffusion of a certain digital content the operator of the network wants to promote. Particular advantages like payment or vouchers may be offered to the super-node if it starts the diffusion. For example, on a web page, a user has access to a list of digital contents suggested by the network operator. By selecting a digital content in this list, the content is added to the contents the user has access to, and which it can share.

In another embodiment, the pricing can include timeframe criteria, for example the user launching a digital content (e.g. an advertiser) can be required to pay for a fixed total number of exchanges or an unlimited number of exchanges, measured within a certain time frame. Combinations of time-frame and quantity-based pricing mechanisms are possible.

In one embodiment, after a certain predefined number of diffusions of digital content, a user is redirected to a website to buy or receive a product, e.g., a full video, a music album, a concert ticket, a piece of software (app). This redirection can thus be an access to a gift or to a reward for the activity of the user (as a node). It also can be an access to a special discount, if the content at redirection is not entirely free.

In one embodiment, web pages (e.g. e-commerce web pages) contain a link/icon which upon selection will add a corresponding digital content (corresponding to the actual content of the website, e.g., a book in a commercial library website) to the user's account. In one embodiment, the user can then diffuse the digital content to other people of the social network, possibly associated with a message. The message can be a mere recommendation "I love this book". The message also can be a call for a gift "propagate this content 3 times and the seller will offer me the item" or "if this content scores 10000 exchanges, I will get one free". Other downstream nodes may see the discussed propagation as "Help Joe to get his book". Depending on the chosen model, the user may indeed gain some rewards or discount, e.g. free product or free parts of it, new functionalities, credits to buy other things (including on other platforms).

In another embodiment, the operator of the social network can sell aggregated - anonymous, anonymized or de-identified - data to customers (for example advertisers). For example, the social operator can establish and sell studies regarding the total number of exchanges for a given content or a type of digital content, the analysis of locations of the propagation of one or more digital contents, the noticeable time slots and frequencies, speeds of diffusion (minimal, average, peak), most active users (super nodes), average age, gender, social category of the users, other digital contents also shared by the same users. Such an analysis can be further useful for traditional media planning or geolocated advertising.

In one embodiment, the corresponding identification data remaining confidential and to the sole knowledge of the social network operator, advertisers can be required to pay to access certain nodes of the network. The latter can be "super-nodes" of the social network. They also can be "seed users" according to certain criteria (like age, income, location, activity, number of contacts, history in communication of digital contents). These accesses to such special nodes / users can be adjusted and differently billed for the launch of a new digital content. As explained, the real-time monitoring (and the associated control) of the propagation of the digital contents is also valuable.

In one embodiment, the organizer of an event (e.g. a trade fair) can pay the network operator to equip the event with the devices which allow the exchange of digital contents. For example, visitors of the trade fair can collect and exchange digital objects (e.g. digital business cards from people they have met, brochures they have collected from a stand, etc.). In one embodiment, the organizer can get access to statistics of its event (e.g. number of users per stand, most popular brochures, stands, etc.).

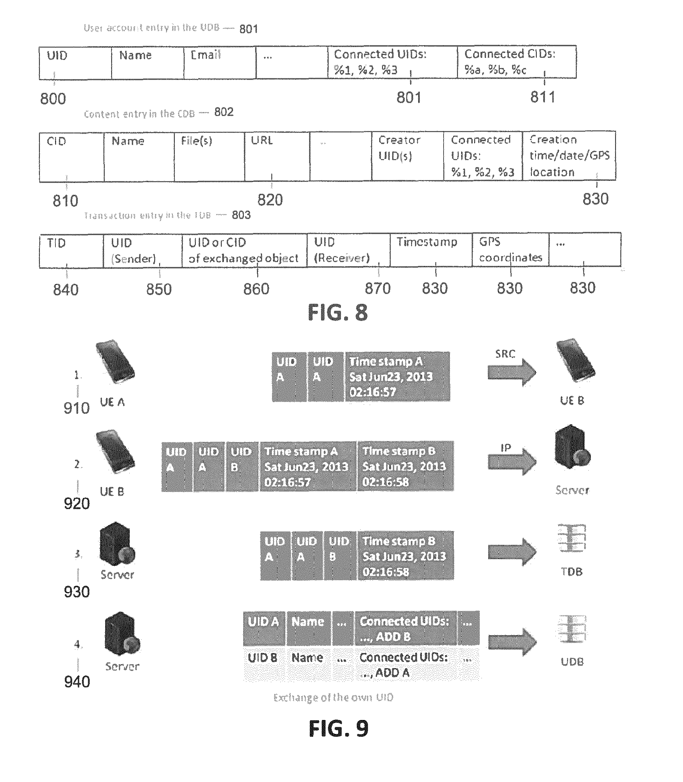

Figure 8 illustrates database and transaction aspects for an exemplary embodiment of the invention. The following definitions are introduced:
- User data base 801 (UDB): The UDB contains a list of all user accounts.
- Content data base 802 (CDB): The CDB contains a list of all digital contents (or objects).
- Transaction data base 803 (TDB): The TDB contains a list of all transactions.
- User account: A user account is an entry in the UDB. It consists of a unique user identification number 800 (UID, or "user") plus some additional information, such as user name, contact details, etc. A user account can be connected to a multiplicity of other UIDs 801 and CIDs 811. A UID can be a user profile.
- Digital content (DC), or digital object: a digital content is an entry in the CDB. It consists of a unique content identification number 810 (CID) plus some additional data 830, such as files, text, URL 820, creation date, creation time, creation location (GPS coordinates). A digital content has one or multiple creators, i.e., UIDs 800, and it can be connected to a multiplicity of other UIDs 801.
- Transaction: A transaction is an entry in the TDB. It consists of a unique transaction identification number 840 (TID), the sender UID 840, the receiver UID 870, and another UID or CID 860 which corresponds to the object exchanged between the creator (or originator) and the receiver. It can also contain additional information 830, e.g. time, date, GPS location or transaction code.
- User equipment (UE): A UE is a mobile handheld device (e.g., smart phone, tablet, smart watch, smart glasses, etc.) which is equipped with a screen (or some form of display), internet connection (wireless or wired), and at least one short range communication (SRC) technology. The UE runs the MA and is associated to a UID. Two UEs can exchange UIDs or digital contents with each other with the help of the MA. Furthermore a UE can receive a digital content from an NFC/QR tag or other mechanism such as Airdrop/ iBeacons.
- Mobile application (MA): The mobile application is a software program which is installed on the UE and enables the communication with the server and with other UEs. In order to use the MA, the UE must be associated with a user account. The MA provides functionalities to visualize the details of connected CIDs or digital contents, to create new or modify existing digital contents (created by the same UID), and to modify the content of the CID with which it is associated.
- Desktop application (DA): The desktop application, e.g., accessed through a web browser, allows a user to connect to its user account by providing a user name and a password. Similar to the MA, the DA provides functionalities to visualize the details of connected CIDs or digital contents, to create new digital contents, and to modify the content of the CID with which it is associated.
- Server: The server hosts the UDB, CDB, and TDB and can execute operations on the data bases such as modifying/creating entries, performing searches according to specific criteria. It hosts the DA and communicates with the MAs via an internet connection (IC). The server also computes metrics associated to Users and digital contents, calculates the connection graph of the users and enables different levels of display for the digital contents depending on their exchange history.
- Short range communications (SRC): SRC relates to all technologies which allow the exchange of data between two UEs if they are in physical proximity. This comprises NFC, QR tags, Bluetooth, Wifi, Bump, LTE Direct, Airdrop, iBeacons, communication by acoustic waves, light (infrared), etc.

With reference to figure 9, representing the exchange of the own *UID,* a user account (UID = A) can exchange its profile with another user account (UID B). This profile is a species of a digital content and is communicated via short range communication between the UEs associated with A and B, respectively. The UEs associated with UIDs A and B are referred to as UE A and UE B in figure 9. The procedure consists of the following steps:
- at step 910, UE A exchanges a message via short range communications with UE B. This message contains [Sender UID A, Transferred UID A, (optional) time stamp, GPS coordinates, transaction code, etc.] and is stored on UE B.
- at step 920, as soon as UE B has an internet connection, it sends a message to the server. This message consists of [Sender UID A, Transferred UID A, Receiver UID B, (optional) time stamp + GPS coordinates from UID A, (optional) time stamp + GPS coordinates from UID B, (other optional data)].
- at step 930, the server, upon reception of the message, adds a new entry to the TDB consisting of [Sender UID A, Transferred UID A, Receiver UID B, (optional data, such as time stamp + GPS coordinates from UID A, time stamp + GPS coordinates from UID B, transaction code from UE A)]. (Optional) Only if the difference between the time stamps in the messages sent by UE A and UE B is not too large (for example 1s) and/ or the difference between the GPS coordinates from UE A and UE B are similar (for example distance<1m) and/or the transaction code is valid, STEP 4 is carried out.
- at step 940, the server adds UID A to the list of connected UIDs of UID B in the UDB. The server adds UID B to the list of connected UIDs of UID A in the UDB.
- (Optional, not shown) The server sends a message to the MA running on UE A and UE B and the DA to inform the users that a new profile has been added to their respective connections.

Regarding the exchange of a connected UID, a user account (UID = A) can also exchange a connected user account (UID = B) with another user account (UID = C). In such a case, all corresponding data is embedded and sent to the server. The server adds UID B to the list of connected UIDs of UID C in the UDB. The server adds UID C to the list of connected UIDs of UID B in the UDB. (Optional) The server sends a message to the MA running on UE A, UE B, and UE C and the DA (if the users are logged in) to inform the users that a new profile has been added to their respective connections.

Regarding the exchange of digital objects, a user account (UID = A) can exchange a connected digital object (CID = B) with another user account (UID = C). Similar to the exchange of a user profile described previously, this is done via short range communications between the UEs associated with A and C, respectively. Optionally, a message is sent from the server to the mobile and desktop applications associated with the creator of the digital content with CID B to inform that said object has been given to the user associated to UID C by the user associated to UID A. Depending on the diffusion settings of the digital content with CID B, other users with UIDs associated to CID B can be informed of the new diffusion of the object. Regarding the acquisition of CID from NFC or QR tags, a user account (UID = A) can directly connect to a digital object (CID=B). UE A reads a message from the QR/NFC tag. The message contains [Transferred CID B, (optional) time stamp, GPS coordinates, transaction code] and is stored on UE A. A similar data transmission occurs from UE A to the server which adds CID B to the list of connected digital contents of UID A. Optionally, a message is sent from the server to the mobile and desktop applications associated with the creator of the digital content with CID B to inform that his object has been received by the user associated to UID A. Optionally, depending on the diffusion settings of the digital content with CID B, other users with UIDs associated to CID B can be informed of the new diffusion of the object.

Regarding the display of digital contents, the application allows UE A to display the contents of a digital content B, such as an image, video, text, URL, etc. The way how this content is displayed can be a function of several parameters, such as:
- number of times digital content B or another digital content has been exchanged
- number of times the user account associated with UE A has exchanged digital content B (or another digital content)
- date, time, location of UE A or of the UE associated with the Creator UID of digital content B.
- time elapsed since the creation/diffusion/or reception of digital content B.
- the UID associated with UE A

In one embodiment, the way how a digital content is displayed can change with the number of times it has been exchanged.

In one embodiment, a digital content can have multiple files/images which will be displayed if a user has exchanged it a certain number of times. Which files/data will be displayed can depend on multiple factors/functions which can be determined by the creator of a digital content. For example, in figure 7, the digital content has four files which are associated to four different levels (which correspond to the number of times a user has exchanged the digital content).

Users can add or modify a digital content after they receive it. It is also possible that a user adds to or modifies the content of a digital content after it has received it. Users can add, update, modify or otherwise alter the digital content.

The described methods and systems allow analysis of human distances in-between users. A connection-graph can be extracted from the exchanges between users which are tracked and stored by a central server. Based on these data, the connection-graph can be used to construct a graph indicating the connections in-between users. It is denoted G=(V,E) the connection-graph, with V being the set of vertices (here it corresponds to the set of users) and E the set of edges indicating which vertices are directly linked together. The graph is updated after each new transaction in the system. Once the graph is constructed, one can apply a "shortest-path" algorithm to obtain the path with the minimum distance between every couple of vertices in the graph. Such an algorithm can be for example Dijkstra's algorithm. An application of this process can allow users to know their human distance to any other user of the network. Additionally, the shortest human path can be partially or totally provided. This information can tell a user which of the connected profiles in his/her network is closest to a desired contact the users want to reach.

For example, digital contents and user profiles can be ranked according to different criteria or metrics. These include the number of users a user account is connected to, the number of digital objects a user account is connected to, the number of times a user account has exchanged other user profiles or digital objects. One can also relate two or more users by several parameters. These comprise the shortest distance between them on the social graph number of common connected users and/or digital objects

There is disclosed a "real" social network as opposed to "virtual" social networks which use declarative links, i.e. relationships which may not necessarily happen in the reality or at least for which these relationships do not happen in the same physical shared space.

There is disclosed a viral propagation of digital contents which are dynamically modified during propagation. The propagation is linked or associated with human decisions or moves. The propagation is caused by human beings and/or by machines. The origin or cause of a propagation step is a movement, be it of a machine (robot, car, tool, etc) or of a human being (transportation, shaking hands, etc). There is disclosed a tracking system of physical movements in the physical world, wherein particular movements trigger said tracking and wherein said movements are defined by physical proximity criteria.

The invention can advantageously be implemented as a sub-layer in and of well-known existing large scale social networks. Embodiments of the invention provide a missing piece to these networks and in particular bring an answer to the monetization challenges faced by these networks, further reinstating trust in the links of the graph.

The social graph sketched in the present disclosure indicates that a "real" graph is obtained. In other words, the graph is factual, based on real activities of users. It is not a virtual social graph, for which many contacts and friends in fact never have met. The quality of the relationships between nodes is in fact better or at least different or complimentary of existing (virtual) social networks. In existing social networking websites for example, it is unknown if two persons have ever met in real life or if a virtual profile in such a network corresponds to a real person. Thus, some social networking websites suffer from a lack of trust and a discrepancy between the "virtual network" and the "real network" (the people one meets in real life) of a person. Embodiments of the present invention enable improved social graphs.

The disclosed methods and systems go beyond digital word-of-mouth. Specific features which are only possible with the digital counterpart (i.e. tracking, feedback, sponsoring, monetization, etc) enable a specific handling, monitoring and control of the social network. For example, in the described systems and methods, the exact message/content which is passed from person to person is perfectly known and can only be altered within certain predefined rules (e.g., add content, comments, etc.) In the human word-of-mouth practice, everyone can alter the message at its own will and there is no control over or knowledge of the exact message exchanged. Some embodiments of the invention enforce a physical contact while classical word-of-mouth works also over large distances, e.g. by phone, email, etc. Some embodiments enable to measure the activity/speed of distribution of a message. This is not possible in classical word-of-mouth. Some other embodiments enable to distribute a content, e.g., to gain reputation, money, and/or to become famous. In some embodiments, other users of the social network can see who has distributed a message, when and where. According to embodiments of the invention, the origin of the content (i.e. its creator) is known.

In some embodiments, there is allowed a user to put a person he/she meets into contact with another person in his personal network, i.e. a person he/she has met before (for example an "introduction" to another user). In some other embodiments, a "human distance" or "hops" can be defined. Two persons having met in person have a human distance of 1 (one), by convention (this number is provided for example only and the disclosed metrology is not limited to it). A person which was introduced to a given person by another person of the network of said given person with a human distance of X has the human distance X+1 to said given person. In some other embodiments, every exchange of profiles or digital contents is based on physical proximity. Providing fake or erroneous data associated with an identity declared in a social network is rendered complicated according to some embodiments of the present invention, since there is a (unavoidable) requirement to exchange information with other (real) people by meeting them in person.

In some embodiments of the invention, unsolicited or unwanted messages or notifications cannot exist since exchanges of digital content are done willingly (with intention). This mechanism can correspond to the exact opposite of "spam".

## Claims

1. Computer implemented method of handling a digital content in a social network comprising nodes, said method comprising receiving a notification of a short range communication of a modifiable digital content by a node of the social network.

2. The computer implemented method of claim 1 wherein the short range communication is associated with physical proximity, which is determined by received geolocation data and/or time interval associated with the communication of the digital content and/or the use of a short range communication protocol.

3. The computer implemented method of any preceding claim, further comprising the step of modifying at least a portion of said modifiable digital content and wherein said modification is a function of at least one parameter chosen from the list comprising: date; time; location; the number of communications of the digital content; the number of times a node has communicated the digital content; time elapsed since the creation or the last communication of the digital content; the nodes associated with the communication of the digital content; a device identification number; a random value; and combinations thereof.

4. The computer implemented method of any preceding claim wherein the digital content is modified by a central server of the social network and/or by at least one node of said social network.

5. The computer implemented method of claim 3 or 4, wherein the step of modifying the digital content comprises the step of adding and/or deleting data to/from the digital content, wherein the added and/or deleted data is predefined or random or function of parameters of claim 3, and wherein the added and/or deleted data is a notification message or another piece of data such as a text or an image or a video frame or an encryption key or a piece of software code comprising executable instructions or a portion of another digital content.

6. The computer implemented method of any preceding claim wherein the communication of the digital content is triggered automatically based on motion sensor or accelerometer data or is triggered based on a user input.

7. The computer implemented method of any preceding claim wherein the communication of the digital content is pushed from a first node to a second node or pulled by a second node from a first node.

8. The computer implemented method of any preceding claim wherein the digital content is associated with lifecycle parameters, comprising time-to-live parameters, and/or with one or more predefined rules of existence and/or with conditional network visibility characteristics.

9. The computer implemented method of any preceding claim wherein the digital content is extracted and selected from the user visual environment by steps comprising one or more of: image acquisition, image segmentation, image recognition, face detection, optical character recognition, the retrieval of an associated QR code or a combination thereof.

10. The method of any preceding claim wherein payment is received or requested by a node and/or payment is received or requested by the central server of the social network.

11. The method of any preceding claim, wherein a payment is required to grant or receive an access right to the digital content or to a portion thereof and/or to receive an encryption or decryption key and/or to receive an additional portion of the digital content and/or to unlock a feature associated with the digital content.

12. The computer implemented method of any preceding claim wherein the digital content is at least a portion of text and/or audio and/or video and/or executable program instructions, wherein said digital content is one of URL, SMS, short message, advertisement, commercial offer, email, web page, text file, sound, voice, music, image, 2D movie, 3D movie, game or software program.

13. A computer program comprising instructions for carrying out the steps of the method according to any one of claim 1 to 12 when said computer program is executed on a suitable computer device.

14. A system comprising means adapted to carry out the steps of the method according to any one of claims 1 to 12, said means comprising a computer and/or smartphone and/or a smart watch and/or a wearable computer or a head-mounted display.

15. The system of claim 14 further comprising a web page or an app screen comprising an actionable or displayable icon or button which upon triggering operates a node of the social network to communicate a modifiable digital content.
